# EUROPÄISCHE PATENTANMELDUNG

(11) **EP 1 501 267 A1**
(43) Veröffentlichungstag der Anmeldung: **26.01.2005**
(21) Anmeldenummer: 03029567.9
(22) Anmeldetag: 22.12.2003
(51) Int. Cl.: H04M 1/725, G06F 13/10

(54) **Telekommunikationsendgerät mit USB-Speichermodul**

(30) Priorität: 21.07.2003 DE 10333900
(71) Anmelder: DeTeWe - Deutsche Telephonwerke Aktiengesellschaft & Co. KG, 10997 Berlin (DE)
(72) Erfinder: Wellhausen, Thomas, 14193 Berlin (DE)

(57) **Zusammenfassung**

Um die für die Funktion eines Telekommunikationsendgerätes (1) erforderlichen Funktions- und Einstellparameter sowie allgemeinen Telekommunikationsdaten und individuellen Benutzerdaten unabhängig von der Funktion des Telekommunikationsendgerätes (1) bereitzustellen, werden die Daten, Funktions- und Einstellparameter auf einem USB-(Universal Serial Bus)-Memory-Stick (8) gespeichert, der über eine USB-Schnittstelle (7) mit dem Telekommunikationsendgerät (1) verbindbar ist. Dadurch können im Service-, Reparatur- oder Austauschfall die Funktions- und Einstellparameter sowie sonstigen Betriebs- und individuellen Benutzerdaten auf ein anderes Telekommunikationsendgerät (1) übertragen werden, so dass weder ein Datenverlust auftritt noch ein Servicetechniker zur Einrichtung und Einstellung des Telekommunikationsendgerätes (1) am Ort des Telekommunikationsendgerätes erforderlich ist.

## Beschreibung

Die Erfindung bezieht sich auf ein Telekommunikationsendgerät gemäß dem Oberbegriff des Anspruchs 1.

Telekommunikationsendgeräte erfüllen eine Vielzahl von Funktionen und speichern neben den für ihre Funktion und Zugangsberechtigung erforderlichen Funktions- und Einstellparametern auch individuell Einstellparameter des Benutzers sowie vom Benutzer eingegebene oder vorgegebene Daten, beispielsweise in Form eines Telefon- oder Adressbuches, von Kurznachrichten im SMS-Format, Passwörter und dergleichen. Werden diese Daten sowie Funktions- und Einstellparameter nicht ständig auch extern gespeichert, indem sie beispielsweise über eine Infrarotschnittstelle, Funk-Datenübertragung (Bluetooth) oder über einen leitungsgebundenen Datenübertragungsweg auf ein anderes Terminal oder eine EDV-Einrichtung übertragen werden, so gehen sie bei einer Störung oder im Servicefall ganz oder teilweise verloren.

Auch bei einem Wechsel auf ein anderes Telekommunikationsendgerät steht der Benutzer häufig vor dem Problem, dass die Datenformate nicht kompatibel sind und daher aufwändige Konvertierungen oder wie im Störungs- oder Servicefall eine vollständige Neueingabe der Daten- , Funktions- und Einstellparameter erforderlich ist.

Aus der WO 01/39473 A1 ist ein Mobiltelefon mit einem Decoder zur Wiedergabe von Audiodaten bekannt, das unter anderem eine fest eingebaute oder steckbare Speichereinheit zum Speichern von Audiodaten aufweist, die in einem komprimierten digitalen Audioformat codiert sind, die vom Mobiltelefon in einer internen oder eingesteckten Speichereinheit gespeichert werden, die aus einer Chipkarte, einer Karte mit FLASH-Speicher oder einem als "Memory-Stick" bezeichneten Speichermodul besteht und über eine interne Digitalschnittstelle mit einer fest eingebauten Speichereinheit und einer Mikroprozessor-Steuereinheit verbunden ist, die einen Schnittstellenbaustein ansteuert, der eine externe Digitalschnittstelle, beispielsweise einen USB (Universal Serial Bus) oder eine IrDA-Schnittstelle oder eine Bluetooth-Schnittstelle bereitstellt.

Aufgabe der vorliegenden Erfindung ist es, die für die Funktion eines Telekommunikationsendgerätes erforderlichen Funktions- und Einstellparameter sowie allgemeine Telekommunikationsdaten und individuelle Benutzerdaten unabhängig von der Funktion des Telekommunikationsendgerätes bereitzustellen.

Diese Aufgabe wird erfindungsgemäß dadurch gelöst, dass die Daten, Funktions- und Einstellparameter auf einem USB (Universal Serial Bus)-Memory-Stick gespeichert sind, der über eine USB-Schnittstelle mit dem Telekommunikationsendgerät verbindbar ist.

Die erfindungsgemäße Lösung stellt die für die Funktion eines Telekommunikationsendgerätes erforderlichen Funktions- und Einstellparameter sowie allgemeine Telekommunikationsdaten und individuelle Benutzerdaten unabhängig von der Funktion des Telekommunikationsendgerätes bereit. Dadurch können im Service-, Reparatur- oder Austauschfall die Funktions- und Einstellparameter sowie sonstigen Betriebs- und individuellen Benutzerdaten auf ein anderes Telekommunikationsendgerät übertragen werden, so dass weder ein Datenverlust auftritt noch ein Servicetechniker zur Einrichtung und Einstellung des Telekommunikationsendgerätes am Ort des Telekommunikationsendgerätes erforderlich ist.

Die Bereitstellung der Funktions- und Einstellparameter sowie sonstigen Daten kann ausschließlich über den USB-Memory-Stick oder in Verbindung mit einer internen Speichereinrichtung des Telekommunikationsendgerätes erfolgen.

Im erstgenannten Fall hängt die Funktionsfähigkeit und Betriebsbereitschaft des Telekommunikationsendgerätes von dem in das Telekommunikationsendgerät über eine entsprechende Schnittstelle, beispielsweise über einen USB-Port, eingesteckten USB-Memory-Stick ab, während bei einer Kombination mit einer internen Speichereinrichtung des Telekommunikationsendgerätes bei mit dem Telekommunikationsendgerät verbundenem USB-Memory-Stick jeweils eine Aktualisierung bzw. ein Abgleich des Datenbestandes erfolgt und auch ein vom USB-Memory-Stick unabhängiger Betrieb möglich ist.

Da aber die Funktions- und Einstellparameter des Telekommunikationsendgerätes in jedem Fall auf dem USB-Memory-Stick gespeichert sind, ist ein Ersatz des Telekommunikationsendgerätes bei einem Ausfall oder einer Störung unabhängig von einem Service-Techniker möglich und keine Neueingabe der Funktions- und Einstellparameter sowie der individuellen Daten, sondern allenfalls ein Update des Datenbestandes durch den Benutzer erforderlich.

Der USB-Memory-Stick kann sowohl in das Telekommunikationsendgerät integriert als auch in geeigneter Form an das Gehäuse des Telekommunikationsendgerätes angesetzt und über eine Schnittstelle sowie gegebenenfalls über einen USB-Controller mit dem Telekommunikationsendgerät und dessen Stromversorgung verbunden werden.

Eine vorteilhafte Ausgestaltung der erfindungsgemäßen Lösung besteht darin, dass die interne Speichereinheit des Telekommunikationsendgerätes aus einem RAM oder FLASH-Speicher mit geeigneten Steuerparametern für die elektronischen Datenverarbeitungskomponenten des Telekommunikationsendgerätes besteht.

Der USB-Memory-Stick kann auch aus einem USB-Memory-Stick-Duo bestehen.

Zur Verbindung des USB-Memory-Sticks mit dem Telekommunikationsendgerät kann der USB-Memory-Stick in einen Einschubschacht des Telekommunikationsendgerätes so eingesetzt werden, dass er bündig mit einer Gehäuseseite des Telekommunikationsendgerätes abschließt. Weiterhin kann der in das Telekommunikationsendgerät eingesetzte USB-Memory-Stick zur Sicherung der Verbindung mit dem Telekommunikationsendgerät verriegelt werden.

Anhand eines in der Zeichnung dargestellten Ausführungsbeispieles soll der der Erfindung zugrundeliegende Gedanke näher erläutert werden. Es zeigen:
- Fig. 1 -: eine schematische Draufsicht auf ein als Mobilteil ausgebildetes Telekommunikationsendgerät und
- Fig. 2 -: ein Blockschaltbild der Funktionsteile des Telekommunikationsendgerätes gemäß Fig. 1.

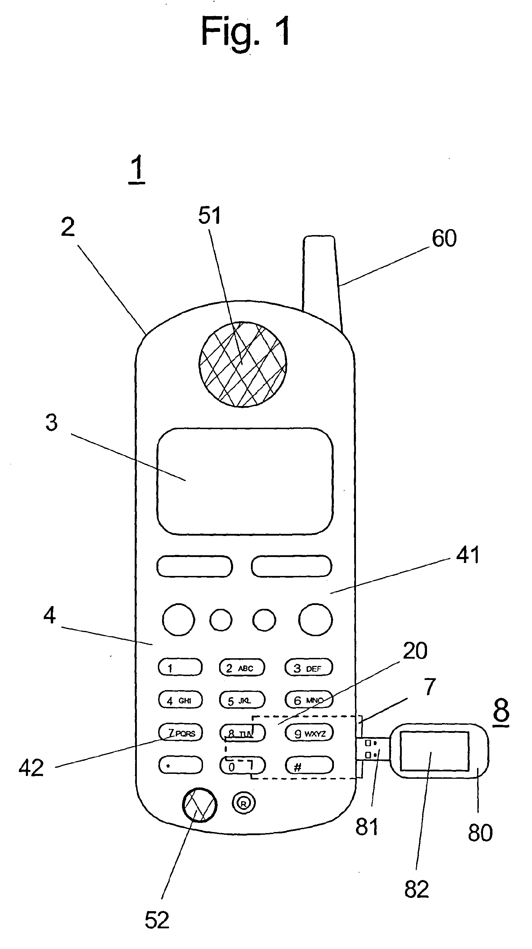

Fig. 1 zeigt eine schematische Draufsicht auf ein Mobilteil 1 eines Telekommunikationsendgerätes mit einem Gehäuse 2 und einer vom Gehäuse 2 des Mobilteils 1 abstehenden Antenne 60 über eine Funkübertragungsstrecke mit einer Basisstation des Telekommunikationsendgerätes verbunden ist, die an die Fernsprechleitungen eines Telekommunikationsnetzes oder an eine Telefonanlage angeschlossen ist. Auf der Frontseite des Gehäuses 2 sind ein Display 3, eine Tastatur 4 mit Funktionstasten 41 und Zifferntasten 42, ein Lautsprecher (Earpiece) 51 und ein Mikrofon 52 angeordnet. Das Display 3 zeigt sowohl Zustände des Mobilteils 1 wie den Ladezustand des Akkumulators und die Empfangsfeldstärke des Mobilteils als auch aktuelle Funktionen der Display-Tasten sowie den Netzanbieter, eine Anruferliste, interne Anrufe, Wahlwiederholungen und dergleichen sowie vom Benutzer gespeicherte persönliche Daten wie Telefonbuch- und Adressbucheintragungen, gesendete und empfangene SMS, programmierte Eingaben und dergleichen an.

Die Funktionstasten 41 umfassen neben Displaytasten für den Netzanbieter, eine Anruferliste, interne Anrufe, Wahlwiederholung, Stummschalten, Einschalten einer Freisprecheinrichtung und dergleichen auch Programmiertasten zum Aufrufen von Leistungsmerkmalen eines Programmierbaumes wie "Zielprogrammierung", "Tonruf", "Tastensperre", "Direktruf", "Geheimnummer ändern", "Gesprächseinheiten abfragen und löschen" sowie eine Zurücktaste, die den Zurücksprung in das vorherige Unterprogramm des Programmierbaumes gestattet. Die Zifferntasten 42 dienen der Eingabe von Rufnummern sowie der Buchstaben- und Zifferneingabe für Programmiervorgänge.

Diese gegebenenfalls programmierten Eingaben des Benutzers werden nach dem Stand der Technik zusammen mit den Funktions- und Einstellparametern des Telekommunikationsendgerätes in einem internen Speicher des Telekommunikationsendgerätes gespeichert und sind damit fester Bestandteil des Telekommunikationsendgerätes, so dass bei einer Störung oder einem erforderlichen Ersatz des Telekommunikationsendgerätes die gespeicherten Daten, Funktions- und Einstellparameter verloren gehen. Während die Funktions- und Einstellparameter dann vom Fachmann zeit- und kostenaufwändig zur Programmierung und Einstellung eines neuen Telekommunikationsendgerätes erneut eingegeben werden müssen, ist auch der Benutzer gezwungen seine persönlichen Daten in die Telefonbuch- und Adressdatei des Telekommunikationsendgerätes einzutragen.

Um diese zeit- und kostenintensiven Eingaben und Einstellungen zu vermeiden, ist erfindungsgemäß am Gehäuse 2 des Mobilteils 1 eine vorzugsweise als USB-Port ausgebildete USB-Schnittstelle 7 vorgesehen, die mit dem USB-Stecker 81 eines USB-Memory-Sticks 8 verbindbar ist. Der USB-Memory-Stick 8 weist neben dem USB-Stecker 81 mit Kontakten für einen digitalen Datentransfer einen in einem Gehäuse 80 angeordneten Speicher 82 sowie gegebenenfalls einen USB-Controller auf. Die USB-Schnittstelle 7 kann unmittelbar an der Gehäuseperipherie angeordnet werden, so dass das Gehäuse 80 des USB-Memory-Sticks 8 vom Gehäuse 2 des Mobilteils 1 absteht oder in das Gehäuse 2 integriert werden, so dass über einen Einschubschacht 20 der USB-Memory-Stick 8 in das Gehäuse 2 des Mobilteils 1 eingefügt und der USB-Stecker 81 mit der am Ende des Einschubschachtes angeordneten USB-Schnittstelle 7 verbunden werden.

Sowohl bei einer Integration des USB-Memory-Sticks 8 in das Gehäuse 2 des Mobilteils 1 als auch bei einer vom Gehäuse 2 des Mobilteils 1 abstehenden Verbindung des USB-Memory-Sticks 8 mit dem Mobilteil 1 kann eine Verriegelung vorgesehen werden, die eine unbeabsichtigte Trennung des USB-Memory-Sticks 8 vom Gehäuse 2 des Mobilteils 1 verhindert.

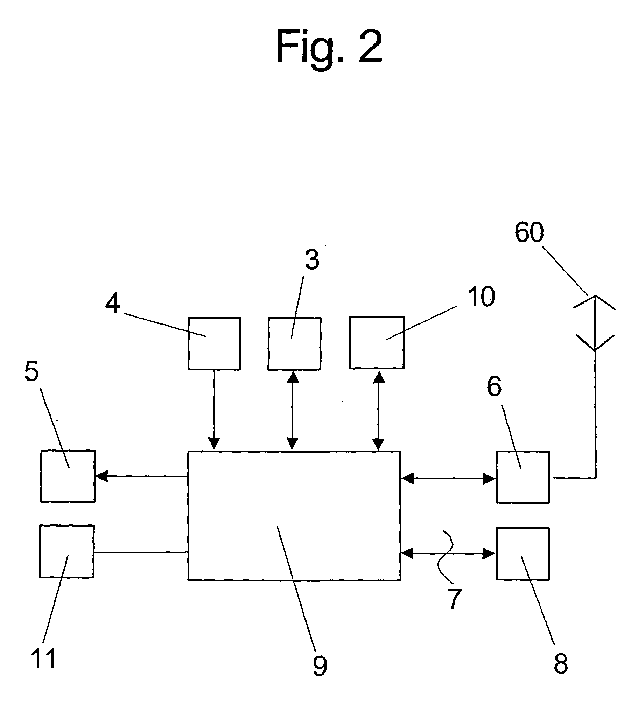

Fig. 2 zeigt ein Blockschaltbild die einzelnen Funktionsteile des in Fig. 1 dargestellten Mobilteils.

Ein Mikroprozessor oder Baseband-Controller 9 ist sowohl mit einer Tastatur 4, einem Display 3, einer internen Speichermodul 10, einem Audio-Interface 5 mit dem Lautsprecher 61 und dem Mikrofon 52 gemäß Fig. 1 sowie mit einem Headset, einer Strom-/Spannungsversorgung 11 mit einem Spannungsregler und einer Ladeeinrichtung sowie mit einem Funkübertragungsbaustein 6 verbunden. Weiterhin ist der Baseband-Controller 9 mit der USB-Schnittstelle 8 verbunden, der bei Bedarf ein USB-Controller nachgeschaltet ist, wenn der Baseband-Controller 9 diese Aufgabe nicht übernimmt.

Der USB-Memory-Stick 8 speichert unabhängig davon, ob er dauerhaft oder vorübergehend mit dem Mobilteil 1 verbunden ist, die Funktions- und Einstellparameter sowie die individuellen Benutzerdaten des Mobilteils 1. Bei einer dauerhaften Verbindung mit dem Mobilteil 1 werden die im USB-Memory-Stick 8 gespeicherten Daten, Funktions- und Einstellparameter an die elektronischen Datenverarbeitungskomponenten des Telekommunikationsendgerätes und hier insbesondere dem Baseband-Controller 9 zur Verfügung gestellt oder in das Speichermodul 10 des Mobilteils 1 übertragen.

Ist keine dauerhafte Verbindung des USB-Memory-Sticks 8 mit dem Mobilteil 1 vorgesehen, so greift der Baseband-Controller 9 beim Zugriff auf die Funktions- und Einstellparameter und die Daten des Mobilteils bzw. des Netzbetreibers auf den Speicher 82 des USB-Memory-Sticks 8 zu, dessen gespeicherte Daten mit den im USB-Memory-Stick 8 gespeicherten Daten abgeglichen werden, wenn der USB-Memory-Stick 8 über die USB-Schnittstelle mit dem Telekommunikationsendgerät bzw. Mobilteil 1 verbunden wird.

Da die Daten, Funktions- und Einstellparameter im USB-Memory-Stick 8 dauerhaft gespeichert sind, können im Servicefall oder bei einer Reparatur oder einem Austausch des Mobilteils die Daten, Funktions- und Einstellparameter auf ein anderes Telekommunikationsendgerät oder ggf. auf eine elektronische Datenverarbeitungseinrichtung übertragen werden, indem der USB-Memory-Stick 8 über eine entsprechende USB-Schnittstelle mit dem betreffenden Telekommunikationsendgerät oder der EDV-Einrichtung verbunden wird. Dadurch ist eine erneute manuelle Eingabe von Funktions- und Einstellparametern sowie individueller Daten des Benutzers bei einem neuen Mobilteil sowie die Hilfe eines Servicetechnikers vor Ort nicht erforderlich.

### Bezugszeichenliste

- 1: Mobilteil (Telekommunikationsendgerät)
- 2: Gehäuse
- 3: Display
- 4: Tastatur
- 5: Audio-Interface
- 6: Funkübertragungsbaustein
- 7: USB-Schnittstelle
- 8: USB-Memory-Stick
- 9: Mikroprozessor oder Baseband-Controller
- 10: Speichermodul
- 11: Strom-/Spannungsversorgung
- 20: Einschubschacht
- 41: Funktionstasten
- 42: Zifferntasten
- 51: Lautsprecher (Earpiece)
- 52: Mikrofon
- 60: Antenne
- 80: Gehäuse
- 81: USB-Stecker
- 82: Speicher

## Patentansprüche

1. Telekommunikationsendgerät mit einer Vorrichtung zum Speichern von Daten, Funktions- und Einstellungsparametern des Telekommunikationsendgerätes,
**dadurch gekennzeichnet,**
**dass** die Daten, Funktions- und Einstellparameter auf einem USB-(Universal Serial Bus)-Memory-Stick (8) gespeichert sind, der über eine USB-Schnittstelle (7) mit dem Telekommunikationsendgerät (1) verbindbar ist.

2. Telekommunikationsendgerät nach Anspruch 1, **dadurch gekennzeichnet, dass** der USB-Memory-Stick (8) Daten des Telekommunikationsendgerätes (1) wie Daten eines Telefonbuchs, Kurznachrichten (SMS-Short Message Service), Zugangscodes oder andere Berechtigungsdaten, Wörter oder dergleichen speichert.

3. Telekommunikationsendgerät nach Anspruch 1 oder 2, **dadurch gekennzeichnet, dass** der USB-Memory-Stick (8) über die USB-Schnittstelle (7) mit Funktionsteilen (9, 10, 11) des Telekommunikationsendgerätes (1) verbunden ist.

4. Telekommunikationsendgerät nach Anspruch 3, **dadurch gekennzeichnet, dass** der USB-Memory-Stick (8) über die USB-Schnittstelle (7) mit einer internen Speichereinheit (10) des Telekommunikationsendgerätes (1) verbindbar ist.

5. Telekommunikationsendgerät nach Anspruch 4, **dadurch gekennzeichnet, dass** die interne Speichereinheit des Telekommunikationsendgerätes (1) aus einem RAM oder FLASH-Speicher besteht.

6. Telekommunikationsendgerät nach mindestens einem der voranstehenden Ansprüche, **dadurch gekennzeichnet, dass** der USB-Memory-Stick (8) aus einem USB-Memory-Stick-Duo besteht.

7. Telekommunikationsendgerät nach mindestens einem der voranstehenden Ansprüche, **dadurch gekennzeichnet, dass** der USB-Memory-Stick (8) über einen USB-Controller mit der USB-Schnittstelle (7) verbunden ist.

8. Telekommunikationsendgerät nach Anspruch 7, **dadurch gekennzeichnet, dass** der USB-Controller mit einem seriellen Speicher, vorzugsweise einem EEPROM verbunden ist.

9. Telekommunikationsendgerät nach mindesten einem der voranstehenden Ansprüche, **dadurch gekennzeichnet, dass** der USB-Memory-Stick (8) in einen Einschubschacht (20) im Gehäuse (2) des Telekommunikationsendgerätes (1) einsetzbar ist.

10. Telekommunikationsendgerät nach Anspruch 9, **dadurch gekennzeichnet, dass** der in das Telekommunikationsendgerät (1) eingesetzte USB-Memory-Stick (8) verriegelbar ist.

11. Telekommunikationsendgerät nach Anspruch 9 oder 10, **dadurch gekennzeichnet, dass** der USB-Memory-Stick (8) bündig mit einer Seite des Gehäuses (2) des Telekommunikationsendgerätes (1) abschließt.

12. Telekommunikationsendgerät nach mindestens einem der voranstehenden Ansprüche, **dadurch gekennzeichnet, dass** das Telekommunikationsendgerät (1) aus einem Schnurlostelefon, insbesondere nach dem DECT-Standard, einem Tischtelefon oder dergleichen besteht.
